# EUROPÄISCHE PATENTANMELDUNG

(11) **EP 4 574 478 A1**
(43) Veröffentlichungstag der Anmeldung: **25.06.2025**
(21) Anmeldenummer: 24220541.7
(22) Anmeldetag: 17.12.2024
(51) Int. Cl.: B60H 1/00, F16L 25/00, F16L 37/02, B29C 49/02, B29C 51/10

(54) **LUFTFÜHRUNGSSYSTEM FÜR EIN KRAFTFAHRZEUG**

(30) Priorität: 21.12.2023 DE 202023107570 U
(71) Anmelder: REHAU Automotive SE & Co. KG, 95111 Rehau (DE)
(72) Erfinder: Walters, Gerhard, 95182 Döhlau OT Tauperlitz (DE)

(57) **Zusammenfassung**

Luftführungssystem für ein Fahrzeug, umfassend wenigstens zwei Luftführungskanäle, wobei sich die Luftführungskanäle in einem gemeinsamen Verbindungsbereich derart überlappen, dass ein erster Verbindungsabschnitt (4) des ersten Luftführungskanals von einem zweiten Verbindungsabschnitt (5) des zweiten Luftführungskanals umschlossen ist, wobei die Verbindungsabschnitte (4, 5) einander entsprechende polygonale Querschnitte aufweisen, wobei die Verbindungsabschnitte (4, 5) über wenigstens eine im Verbindungsbereich vorgesehene Rastverbindung lösbar miteinander verbunden sind, wobei die Rastverbindung aus einem in dem ersten Verbindungsabschnitt (4) ausgeformten Rastelement (7) und einem in dem zweiten Verbindungsabschnitt (5) ausgeformten Gegenrastelement (8) gebildet ist, wobei das Rastelement (7) und das Gegenrastelement (8) auf jeweiligen, aneinander anliegenden Ecken (9a, 9b) der Verbindungsabschnitte (4, 5) angeordnet sind, wobei das Rastelement (7) durch eine lokale Einbuchtung (11) der Außenfläche des ersten Verbindungsabschnittes (4) und das Gegenrastelement (8) durch eine lokale Einbuchtung (11) der Außenfläche des zweiten Verbindungsabschnittes (5) gebildet ist, und wobei der Grund der Einbuchtung (11) zumindest des Gegenrastelements (8) wellenförmig ausgebildet ist.

## Beschreibung

Die vorliegende Erfindung betrifft ein Luftführungssystem für ein Fahrzeug, umfassend wenigstens zwei in einem Blasformungsverfahren oder 2-Platten-Thermoformungsverfahren hergestellte Luftführungskanäle, wobei sich die Luftführungskanäle in einem gemeinsamen Verbindungsbereich derart überlappen, dass ein erster Verbindungsabschnitt des ersten Luftführungskanals von einem zweiten Verbindungsabschnitt des zweiten Luftführungskanals umschlossen ist und, wobei die Verbindungsabschnitte einander entsprechende polygonale Querschnitte aufweisen, und wobei die Verbindungsabschnitte über wenigstens eine im Verbindungsbereich vorgesehene Rastverbindung lösbar miteinander verbunden sind, wobei die Rastverbindung aus einem in dem ersten Verbindungsabschnitt ausgeformten Rastelement und einem in dem zweiten Verbindungsabschnitt ausgeformten Gegenrastelement gebildet ist, wobei das Rastelement und das Gegenrastelement auf den jeweiligen, aneinander anliegenden Ecken der Verbindungsabschnitte angeordnet sind, wobei das Rastelement durch eine lokale Einbuchtung der Außenfläche des ersten Verbindungsabschnittes und das Gegenrastelement durch eine lokale Einbuchtung der Außenfläche des zweiten Verbindungsabschnittes gebildet ist.

Ein gattungsgemäßes Luftführungssystem ist in der Druckschrift EP 3 034 337 B1 offenbart.

Nachteilig an einem Luftführungssystem gemäß dem Stand der Technik ist, dass mitunter sehr hohe Kräfte benötigt werden, damit die Rastelemente und die Gegenrastelemente miteinander verrasten. Dies ist zwar insofern vorteilhaft, dass die Demontagekräfte, und somit die Verbindungsfestigkeit, entsprechend hoch ist. Eine Montage mit geringeren Montagekräften wäre jedoch ebenfalls vorteilhaft.

Die Aufgabe der Erfindung besteht daher in der Schaffung eines Luftführungssystem für ein Fahrzeug, das gegenüber dem Stand der Technik eine Fügung der Verbindungsabschnitte mit einer geringeren Montagekraft gewährleistet und gleichzeitig weiterhin hohe Demontagekräfte ermöglicht.

Diese Aufgabe wird erfindungsgemäß durch ein Luftführungssystem für ein Fahrzeug erfüllt, umfassend wenigstens zwei in einem Blasformungsverfahren oder 2-Platten-Thermoformungsverfahren hergestellte Luftführungskanäle, wobei sich die Luftführungskanäle in einem gemeinsamen Verbindungsbereich derart überlappen, dass ein erster Verbindungsabschnitt des ersten Luftführungskanals von einem zweiten Verbindungsabschnitt des zweiten Luftführungskanals umschlossen ist und, wobei die Verbindungsabschnitte einander entsprechende polygonale Querschnitte aufweisen, und wobei die Verbindungsabschnitte über wenigstens eine im Verbindungsbereich vorgesehene Rastverbindung lösbar miteinander verbunden sind, wobei die Rastverbindung aus einem in dem ersten Verbindungsabschnitt ausgeformten Rastelement und einem in dem zweiten Verbindungsabschnitt ausgeformten Gegenrastelement gebildet ist, wobei das Rastelement und das Gegenrastelement auf den jeweiligen, aneinander anliegenden Ecken der Verbindungsabschnitte angeordnet sind, wobei das Rastelement durch eine lokale Einbuchtung der Außenfläche des ersten Verbindungsabschnittes und das Gegenrastelement durch eine lokale Einbuchtung der Außenfläche des zweiten Verbindungsabschnittes gebildet ist, wobei der Grund der Einbuchtung zumindest des Gegenrastelements wellenförmig ausgebildet ist.

Erfindungsgemäß wurde erkannt, dass das Vorsehen eines wellenförmigen Grunds der Einbuchtung des Gegenrastelements eine geringere Montagekraft ermöglicht und die Demontagekräfte weiterhin einen im Vergleich zu den Montagekräften höheren Wert einnehmen.

Zusätzlich kann auch der Grund der Einbuchtung des Rastelements wellenförmig ausgebildet sein. Hierdurch erhöhen sich die Demontagekräfte nochmals.

Das jeweilige Rastelement und das jeweilige Gegenrastelement können bevorzugt einstückig mit den entsprechenden Verbindungsabschnitten ausgeformt sein. Dies bedeutet, dass das Rastelement mit dem ersten Verbindungsabschnitt einstückig ausgeformt und das Gegenrastelement einstückig mit dem zweiten Verbindungsabschnitt ausgeformt sind. Das Ausformen erfolgt insbesondere bereits bei der Herstellung der Luftführungskanäle im Blasformungsverfahren oder 2-Platten-Thermoformungsverfahren.

Die Einbuchtung und / oder die Ausbuchtung ist / sind bevorzugt direkt auf der jeweiligen Ecke der Verbindungsabschnitte gebildet.

Die oder die jeweilige wellenförmige Einbuchtung kann / können bevorzugt parallel zum Öffnungsrand des entsprechenden Verbindungsabschnittes orientiert sein.

Die Verbindungsabschnitte können einander entsprechende polygonale Querschnitte mit jeweils wenigstens drei Ecken aufweisen, wobei das Rastelement und das Gegenrastelement auf wenigstens zwei der jeweiligen, aneinander anliegenden Ecken der Verbindungsabschnitte angeordnet sind.

Zur vereinfachten Verbindbarkeit der Luftführungskanäle kann der Öffnungsrand des außenliegenden zweiten Luftführungskanals und/oder der Öffnungsrand des innenliegenden ersten Luftführungskanals zumindest abschnittsweise eine Einführschräge aufweisen. Ein Längsschnitt der Einführschräge weist hierbei bevorzugt wenigstens zwei sich voneinander unterscheidende Steigungen der Einführschräge auf. Bevorzugt wird die Steigung hierbei in Montagerichtung kleiner, so dass bei der zunehmenden Überdeckung der Verbindungsabschnitte die ansonsten zunehmenden Kräfte / Reibungen durch die verringerte Steigung der Einführschräge kompensiert wird und infolge eine weitgehend konstante Montagekraft erzielbar ist. Die Einführschräge kann in einzelnen Abschnitten oder stufenlos oder einer Kurvenbahn folgend eine in Montagerichtung kleiner werdende Steigung aufweisen.

Die Luftführungskanäle sind bevorzugt aus einem thermoplastischen Kunststoff gebildet. Als besonders geeignet haben sich hierbei Polyolefine, insbesondere Polypropylen und Polyethylen (PE-LD, PE-HD) erwiesen.

Teil der Erfindung ist ferner eine Belüftungs-Heizungs- oder Klimaanlage eines Fahrzeuges mit zumindest einem Gebläse, zumindest einem Luftstromsteuerelement und ggf. zumindest einem Wärmetauscher, wobei die Anlage wenigstens ein vorstehend beschriebenes Luftführungssystem, insbesondere ein Luftführungssystem nach einem der Ansprüche 1 bis 9, aufweist.

Die Erfindung wird anhand der folgenden, lediglich Ausführungsbeispiele darstellender Zeichnungen näher erläutert.

Es zeigen:
- Fig. 1: eine dreidimensionale Teilansicht eines Luftführungssystems vor dessen Zusammenbau;
- Fig. 2: eine dreidimensionale Teilansicht des Luftführungssystems aus Fig. 1 nach dessen Zusammenbau;
- Fig. 3: eine Querschnittdarstellung durch den Verbindungsbereich des Luftführungssystems gemäß der Schnittlinie A-A aus Fig. 2;
- Fig. 4: eine weitere Variante in einer Querschnittdarstellung durch den Verbindungsbereich des Luftführungssystems gemäß der Schnittlinie A-A aus Fig. 2.

Gleiche oder funktionsgleiche Elemente sind mit den gleichen Bezugszeichen versehen.

Die nachfolgenden Figuren zeigen ein Luftführungssystem für ein Fahrzeug, umfassend wenigstens zwei in einem Blasformungsverfahren oder 2-Platten-Thermoformungsverfahren hergestellte Luftführungskanäle 1, 2.

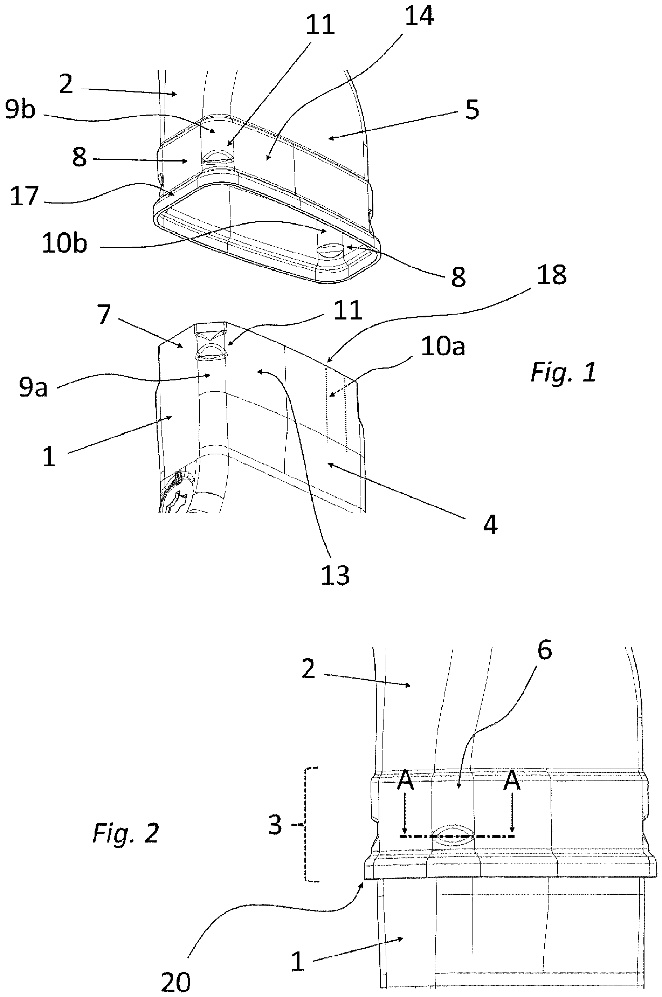

Die Luftführungskanäle 1, 2 überlappen sich derart in einem gemeinsamen Verbindungsbereich 3, dass ein erster Verbindungsabschnitt 4 des ersten Luftführungskanals 1 von einem zweiten Verbindungsabschnitt 5 des zweiten Luftführungskanals 2 umschlossen ist (vgl. Fig. 2).

Die Verbindungsabschnitte 4, 5 weisen einander entsprechende polygonale Querschnitte aufweisen, wie beispielsweise in den Fig. 1 ersichtlich, die die beiden Luftführungskanäle 1, 2 vor deren Verbindung miteinander zeigen.

Die Verbindungsabschnitte 4, 5 sind über wenigstens eine im Verbindungsbereich 3 vorgesehene Rastverbindung 6 lösbar miteinander verbunden (vgl. Fig. 2), wobei die Rastverbindung 6 aus einem in dem ersten Verbindungsabschnitt 4 ausgeformten Rastelement 7 und einem in dem zweiten Verbindungsabschnitt 5 ausgeformten Gegenrastelement 8 gebildet ist (vgl. Fig. 1).

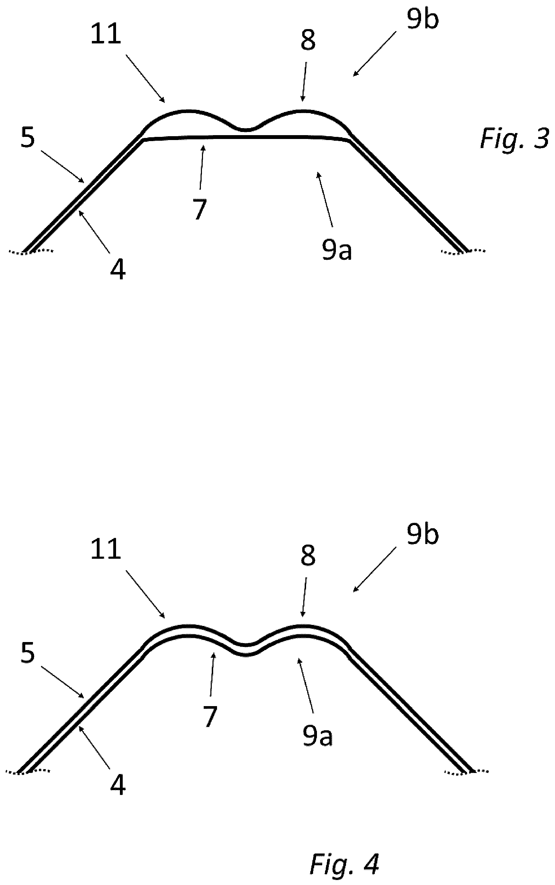

In der Fig. 3 ist in der Querschnittsdarstellung gemäß der Schnittlinie A-A aus Fig. 2 verdeutlicht, dass der Grund der Einbuchtung 11 des Gegenrastelements 8 wellenförmig ausgebildet ist.

In der Fig. 4 ist als eine mögliche Variante auch der Grund der Einbuchtung 11 des Rastelements 7 wellenförmig ausgebildet.

Die Einbuchtung 11 oder die Einbuchtungen 11 ist / sind direkt auf der jeweiligen Ecke 9a, 9b der Verbindungsabschnitte 4, 5 gebildet (vgl. Fig. 1, Fig. 2, Fig. 3 oder Fig. 4).

Die oder die jeweilige wellenförmige Einbuchtung 11 ist parallel zum Öffnungsrand 17, 18 des entsprechenden Verbindungsabschnittes 4, 5 orientiert (vgl. Fig. 1).

Das Rastelement 7 und das Gegenrastelement 8 sind jeweils einstückig mit den entsprechenden Verbindungsabschnitten 4, 5 ausgeformt.

Die Verbindungsabschnitte 4, 5 weise einander entsprechende polygonale Querschnitte mit jeweils wenigstens drei Ecken 9a, 9b, 10a, 10b auf, wobei das Rastelement 7 und das Gegenrastelement 8 auf wenigstens zwei der jeweiligen, aneinander anliegenden Ecken 9a, 9b, 10a, 10b der Verbindungsabschnitte 4, 5 angeordnet sind (vgl. Fig. 1).

Zur vereinfachten Verbindbarkeit der Luftführungskanäle 1, 2 weist der Öffnungsrand 17 des außenliegenden zweiten Luftführungskanals 2 und/oder der Öffnungsrand 18 des innenliegenden ersten Luftführungskanals 1 zumindest abschnittsweise eine Einführschräge 20 auf (vgl. Fig. 1).

Beide Luftführungskanäle 1, 2 sind aus einem thermoplastischen Kunststoff gebildet.

Eine an sich bekannte Belüftungs-Heizungs- oder Klimaanlage eines Fahrzeuges mit zumindest einem Gebläse, zumindest einem Luftstromsteuerelement und ggf. zumindest einem Wärmetauscher kann ein Luftführungssystem wie vorstehend beschrieben aufweisen.

## Patentansprüche

1. Luftführungssystem für ein Fahrzeug, umfassend wenigstens zwei in einem Blasformungsverfahren oder 2-Platten-Thermoformungsverfahren hergestellte Luftführungskanäle (1, 2),
wobei sich die Luftführungskanäle (1, 2) in einem gemeinsamen Verbindungsbereich (3) derart überlappen, dass ein erster Verbindungsabschnitt (4) des ersten Luftführungskanals (1) von einem zweiten Verbindungsabschnitt (5) des zweiten Luftführungskanals (2) umschlossen ist und,
wobei die Verbindungsabschnitte (4, 5) einander entsprechende polygonale Querschnitte aufweisen, und
wobei die Verbindungsabschnitte (4, 5) über wenigstens eine im Verbindungsbereich (3) vorgesehene Rastverbindung (6) lösbar miteinander verbunden sind,
wobei die Rastverbindung (6) aus einem in dem ersten Verbindungsabschnitt (4) ausgeformten Rastelement (7) und einem in dem zweiten Verbindungsabschnitt (5) ausgeformten Gegenrastelement (8) gebildet ist,
wobei das Rastelement (7) und das Gegenrastelement (8) auf den jeweiligen, aneinander anliegenden Ecken (9a, 9b, 10a, 10b) der Verbindungsabschnitte (4, 5) angeordnet sind,
wobei das Rastelement (7) durch eine lokale Einbuchtung (11) der Außenfläche (13) des ersten Verbindungsabschnittes (4) und das Gegenrastelement (8) durch eine lokale Einbuchtung (11) der Außenfläche (14) des zweiten Verbindungsabschnittes (5) gebildet ist,
**dadurch gekennzeichnet, dass**
der Grund der Einbuchtung (11) zumindest des Gegenrastelements (8) wellenförmig ausgebildet ist.

2. Luftführungssystem nach Anspruch 1, **dadurch gekennzeichnet, dass** auch der Grund der Einbuchtung (11) des Rastelements (7) wellenförmig ausgebildet ist.

3. Luftführungssystem nach einem der Ansprüche 1 oder 2, **dadurch gekennzeichnet, dass** die Einbuchtung (11) oder die Einbuchtungen (11) direkt auf der jeweiligen Ecke (9a, 9b) der Verbindungsabschnitte (4, 5) gebildet ist / sind.

4. Luftführungssystem nach einem der vorstehenden Ansprüche, **dadurch gekennzeichnet, dass** die oder die jeweilige wellenförmige Einbuchtung (11) parallel zum Öffnungsrand (17, 18) des entsprechenden Verbindungsabschnittes (4, 5) orientiert ist.

5. Luftführungssystem nach einem der vorstehenden Ansprüche, **dadurch gekennzeichnet, dass** das Rastelement (7) und/oder das Gegenrastelement (8) jeweils einstückig mit den entsprechenden Verbindungsabschnitten (4, 5) ausgeformt ist / sind.

6. Luftführungssystem nach einem der vorstehenden Ansprüche, **dadurch gekennzeichnet, dass** die Verbindungsabschnitte (4, 5) einander entsprechende polygonale Querschnitte mit jeweils wenigstens drei Ecken (9a, 9b, 10a, 10b) aufweisen, wobei das Rastelement (7) und das Gegenrastelement (8) auf wenigstens zwei der jeweiligen, aneinander anliegenden Ecken (9a, 9b, 10a, 10b) der Verbindungsabschnitte (4, 5) angeordnet sind.

7. Luftführungssystem nach einem der vorstehenden Ansprüche, **dadurch gekennzeichnet, dass** zur vereinfachten Verbindbarkeit der Luftführungskanäle (1, 2) der Öffnungsrand (17) des außenliegenden zweiten Luftführungskanals (2) und/oder der Öffnungsrand (18) des innenliegenden ersten Luftführungskanals (1) zumindest abschnittsweise eine Einführschräge (20) aufweist / aufweisen.

8. Luftführungssystem nach Anspruch 7, **dadurch gekennzeichnet, dass** der Längsschnitt der Einführschräge (20) wenigstens zwei sich voneinander unterscheidende Steigungen aufweist.

9. Luftführungssystem nach einem der vorstehenden Ansprüche, **dadurch gekennzeichnet, dass** die Luftführungskanäle (1, 2) aus einem thermoplastischen Kunststoff gebildet sind.

10. Belüftungs- Heizungs- oder Klimaanlage eines Fahrzeuges mit zumindest einem Gebläse, zumindest einem Luftstromsteuerelement und gegebenenfalls zumindest einem Wärmetauscher, **dadurch gekennzeichnet, dass** die Anlage wenigstens ein Luftführungssystem nach einem der vorstehenden Ansprüche aufweist.
